# EUROPÄISCHE PATENTSCHRIFT

(11) **EP 1 352 322 B1**
(45) Veröffentlichungstag und Bekanntmachung des Hinweises auf die Patenterteilung: **08.06.2005**
(21) Anmeldenummer: 02715414.5
(22) Anmeldetag: 11.01.2002
(51) Int. Cl.: G06F 9/445

(54) **DURCHFÜHRUNG EINES ZEITOPTIMIERTEN AUSTAUSCHES EINER SOFTWARE-APPLIKATION**
TIME-OPTIMIZED REPLACEMENT OF A SOFTWARE APPLICATION
REMPLACEMENT D'UNE APPLICATION LOGICIEL OPTIMISE DANS LE TEMPS

(30) Priorität: 19.01.2001 EP 01101277
(43) Veröffentlichungstag der Anmeldung: 15.10.2003
(73) Patentinhaber: SIEMENS AKTIENGESELLSCHAFT, 80333 München (DE)
(72) Erfinder: BRAGULLA, Jürgen, 81379 München (DE); KRAUSS, Dietmar, 81476 München (DE)
(86) Internationale Anmeldenummer: PCT/EP2002/000227
(87) Internationale Veröffentlichungsnummer: WO 2002/057915

(56) Entgegenhaltungen:
- EP-A- 0 698 847

## Beschreibung

Die Erfindung betrifft ein Verfahren zur Durchführung eines Zustandswechsels auf mindestens einem Rechner von einem Ist-Zustand in einen Ziel-Zustand, bei dem der Zustandswechsel insbesondere einen Austausch oder eine Erstinbetriebnahme einer Software bzw. eines Software Packages betrifft.

Der Einsatz von Software unterliegt einer ständigen Weiterentwicklung, so daß bereits bestehende und im Einsatz befindliche Applikationen an neue Anforderungen (z.B. vermehrte Hardware Leistung) angepaßt oder weiterentwickelt werden müssen. Das führt dazu, daß die bestehende und im Betrieb befindliche Applikation gegen eine neuere Version, ein Upgrade / Update oder gegen eine korrigierte Version (Patch) ausgetauscht werden muß.

Es bestehen grundsätzlich mehrere Möglichkeiten, Software auf einem Rechner zu installieren. Früher wurde ein Satz von Disketten verwendet, bei dem die erste Diskette üblicherweise ein Setup Programm und eine komprimierte Datei enthält. Die dekomprimierten Datei(en) wird/werden dann auf ein Zielverzeichnis auf dem Targetsystem kopiert. Das Setup Programm führt dabei den Anwender durch die Installationsroutine und kann zusätzlich gegebenenfalls bestimmte Konfigurationsdateien des Targetsystems abändern.
Heute kann eine CD verwendet werden, die ein ähnliches Vorgehen ermöglicht und die mehr Speicherraum zur Verfügung stellt.
Weiterhin ist der Einsatz von Shells bekannt, die einen zugehörigen Dateibaum automatisch extrahieren und in einem auszuwählenden Verzeichnis ablegen.

Soll keine Erstinstallation erfolgen, sondern eine bereits installierten Software reinstalliert werden, so bestehen grundsätzlich zwei Möglichkeiten:
1. Nach einer Deinstallation des alten Paketes wird das neue Paket komplett neu installiert. Vorteil dieses Verfahrens ist, daß alle neu installierten Files auch tatsächlich dieselbe Version haben und Fehler aufgrund von fälschlicherweise nicht geänderter Dateien ausgeschlossen werden können. Der große Nachteil: dieses Vorgehen ist sehr zeitaufwendig.
2. Es erfolgt keine Deinstallation, sondern es werden nur die Teile nachinstalliert, die sich bei der neuen Version ändern. Dies ist zwar schneller, aber der Datenaustausch zwischen den alten und neuen Files führt häufig zu Fehlern.

All die bekannten Techniken zur Installation sind allerdings sehr zeitintensiv und erfordern einen längeren Zeitraum, in dem weder die alte noch die neue Software lauffähig ist.

Bei besonders zeitkritischen Anwendungen, wie in den Bereichen Telekommunikation und Datenbanken ist ein zeitoptimierter Austausch von Applikationssoftware unerläßlich, um nicht den Betrieb des Gesamtsystems zu stören.
Im Hinblick auf die oben erwähnten Einsatzbereiche, die eine nahezu vollständige zeitliche Abdeckung der Applikation erfordern, ist es nicht tragbar, daß durch den notwendigen Austausch der Software diese eine längere Zeit nicht lauffähig ist.

Doch ein möglichst zeitoptimierter Zustandswechsel ist nicht nur für den Austausch von Software entscheidend, sondern gilt auch, wenn bestimmte Systemvariablen verändert werden sollen oder wenn bestimmte Peripheriegeräte und/oder Hardwarekomponenten durch andere ersetzt werden sollen, so daß beispielsweise die Verwendung anderer Treiber notwendig wird. Grundsätzlich ist ein zeitoptimierter Austausch dann erforderlich, wenn andere Prozesse auf die laufende auszutauschende Software zurückgreifen.

Bisher erfolgte der den Austausch von Software betreffende Zustandswechsel, indem die bisherige Software außer Betrieb genommen worden ist, gegen eine neu zu installierende ausgetauscht worden ist und die Applikation und / oder das System daraufhin wieder in Betrieb genommen worden ist (vgl. EP-A-0 698 847).

Dieses Vorgehen erweist sich aus den oben dargestellten Gründen der Zeitoptimierung als sehr nachteilig; das Vorgehen bei einem Austausch von Software ist bislang von dem allgemeinen Einsatz von Applikationssoftware in anderen Bereichen übernommen worden, die eine weitaus größere zeitliche Toleranz aufweisen. Soll beispielsweise ein Zeichenprogramm gegen eine neue Version desselben ausgewechselt werden, war eine kurzzeitige Nicht-Verfügbarkeit der Applikation ohne weiteres hinzunehmen. Dies ist aber im Bereich der Telekommunikation, insbesondere bei carrier grade Systemen, nicht der Fall, da diese eine maximale Verfügbarkeit voraussetzen.

Die vorliegende Erfindung hat sich deshalb zur Aufgabe gestellt, ein Verfahren zu schaffen, das ein zeitoptimierten Zustandswechsel, insbesondere einen zeitoptimierten Austausch von Softwareapplikationen ermöglicht und automatisiert ablaufen kann. Die Aufgabe liegt insbesondere darin, ein Verfahren für den Austausch von Applikationen auf einzelnen Rechnern in einem Verbund von Rechnern zu schaffen.

Diese Aufgabe wird durch das eingangs erläuterte Verfahren gelöst, das sich in eine Vorbereitungsphase und eine nachfolgende Aktivitätsphase gliedert, wobei die Vorbereitungsphase im Ist-Zustand ausgeführt wird und folgende Schritte aufweist:
- Erfassen von Steuerinformationen, die den Ziel-Zustand betreffen
- automatisches Erzeugen von mindestens einem Script aus den Steuerinformationen,
- Speichern der Daten für den Ziel-Zustand in ein Zwischenverzeichnis,
und bei dem während der Aktivitätsphase der Zustandswechsel durchgeführt wird, indem der Betrieb im Ist-Zustand beendet und das Script angewendet wird, durch das die Daten für den Ziel-Zustand in einem Zielverzeichnis zugänglich werden, ohne daß die gesamten Daten für den Ziel-Zustand physikalisch bewegt werden müssen.

Die Lösung der Aufgabe gemäß Hauptanspruch besteht insbesondere darin, daß in der Aktivitätsphase keine physikalische Bewegung der Daten erfolgt, insbesondere keine Bewegung des gesamten Software Packages mit zugehörigem Verzeichnisbaum.

Im Unterschied zu dem bisherigen, aus anderen Gebieten der Installationstechnik übernommenen Vorgehen des Zustandswechsels und Softwareaustausches erweist es sich als sehr vorteilhaft für die Verfügbarkeit der jeweiligen Software, daß die Zeit die der Zustandswechsel in Anspruch nimmt, markant gesenkt werden kann. Dies wird erreicht, indem der Bereich der Softwareinstallation in zwei Phasen unterteilt wird: in eine Vorbereitungsphase, die noch während dem Ist-Zustand ausgeführt wird, also während des Betriebs der alten Software oder während des Betriebs ohne die neue zu installierende Software. Die zweite Phase, eine sogenannte Aktivitätsphase, dient zur unmittelbaren Ausführung des Zustandswechsels ohne daß ein Datentransfer notwendig ist. Durch zeitliche Vorwegnahme der Vorbereitungsphase kann die zeitkritische Aktivitätsphase, nach dem Beenden des Ist-Zustandes und zur Einleitung des Ziel-Zustandes auf die Ausführung lediglich eines oder mehrerer Verschiebebefehls/e eingeschränkt werden. Indem also wesentliche Teile des Installationsvorganges, wie beispielsweise Ladevorgänge und Prozesse zur Erzeugung der passenden Umgebung, zeitlich vorgezogen werden, kann die Zeit bis zum Beginn des Ziel-Zustandes und weiterhin die Zeit des Shut-Downs minimiert werden. Gerade Letzteres ist von besonderer Wichtigkeit, da der Zeitraum der Inaktivitätsphase einer bereits installierten Software, die durch ein Upgrade, ein Update oder einen Patch ersetzt werden soll, möglichst minimal sein soll.

Dadurch ergeben sich insbesondere auf dem Gebiet der Applikationen für Netzbetreiber und Dienstleistungsanbieter wesentlich verbesserte Ausfallzeiten der eingesetzten Software.

Ein weiterer Vorteil liegt auch in der Automatisierbarkeit des Vorgehens, insbesondere darin, daß zeitoptimierte Scripts automatisch erzeugt werden können und in der Generierung des zugehörigen Environments für die Software im Zielzustand bzw. für die aktuelle Version der Software. Dies wird ermöglicht, indem eine Analyse des Ist-Zustandes erfolgt, in der bestimmte Systemparameter (z.B. Environmentvarablen) automatisch erfaßt werden. Daraufhin kann dann eine dynamisch angepaßte, automatische Installation erfolgen, da die Scripts zur Ausführung der Installation die erfaßten Systemparameter berücksichtigen. Dieses dynamisch angepaßte Installationsverfahren ist bisher nicht bekannt und nicht allein aus Zeitgründen vorteilhaft, da die bisher notwendige interaktive Eingabe von Informationen ein zeitoptimiertes Verfahren nicht ermöglicht.

Damit ergibt sich auch eine geringere Fehleranfälligkeit als bei den bisherigen Systemen, da die automatisch erzeugten Pfadnamen fehlerfrei generiert werden und mit den korrespondierenden Directories übereinstimmen. Fehler entstanden bisher beispielsweise dadurch, daß bei einem Upgraden einer Applikation auf einem Windows-System Teile bzw. Bereiche des Betriebssystems, z.B. die DLL-files, durch die Installation der Applikationssoftware geändert werden. Das kann zu einem Zustand führen, bei dem DLL-Files in der alten Version und in der neuen Version bestehen. Es erfolgt jedoch kein Tracing für das überschreiben von DLL-Files. Bei einer Sequenz von Installationen und Deinstallationen können dann Inkongruenzen entstehen.

In den bevorzugten Ausführungsformen der Erfindung wird das Verfahren zur Durchführung des Zustandswechsel auf Rechner angewendet, die im Bereich von carrier-grade-Systemen auf dem Gebiet der Telekommunikation eingesetzt werden.

Eine besonders vorteilhafte Ausführungsform der Erfindung bezieht sich auf Clusterrechner. Um die Rechenleistung zu erhöhen und andere Systemparameter vorteilhaft zu beeinflussen werden vielfach Cluster eingesetzt, ein Verbund von vernetzten Rechnern, denen die gleiche Aufgabe zugeordnet ist. Insbesondere finden sogenannte Stand-By-Cluster oder Verfügbarkeitscluster Verwendung, um - wie der Name sagt - die Verfügbarkeit eines Systems optimieren zu können. Beispielsweise könnte das Cluster aus zwei Maschinen bestehen, wobei eine Maschine eine bestimmte Aufgabe ausführt, die ihr zugeordnet ist. Die andere Maschine befindet sich im Stand-By-Modus. Erst wenn die erste Maschine meldet, daß Probleme (z.B. ein Hardware-Defekt oder ein Software-Fehler) auftreten, übernimmt die zweite Maschine die Jobs der ersten.(Es erfolgt keine Last-Teilung). Das heißt, es gibt einen nicht-aktiven oder Stand-By-Zustand von einer Maschine oder in anderen Konzepten von einem Verbund von Maschinen.

Dieser Stand-By-Zustand, die sogenannte Clusterredundanz, wird bei dieser Erfindung so ausgenützt, daß der Zustandswechsel nur die jeweils inaktive Seite des Clusters betrifft. Damit kann die Verfügbarkeit zusätzlich erhöht werden.

In einer weiteren vorteilhaften Ausführungsform der Erfindung wird als Betriebssystem "UNIX" verwendet. Der Verschiebebefehl wird dann durch die Verwendung eines oder einer Abfolge von MOVE-Befehlen ausgeführt.
Der MOVE-Befehl ist deshalb zeitoptimiert, da keine Daten bewegt werden, sondern nur der oberste Eintrag des entsprechenden Directory-Baumes - der sogenannte Inode-Entry - abgeändert bzw. umgeleitet wird. Da in der Vorbereitungsphase alle notwendigen Vorkehrungen getroffen worden sind, ist in der Aktivitätsphase erfindungsgemäß nur noch der MOVE-Befehl auszuführen.

Als sehr vorteilhaft erweist es sich, daß die Umgebung für die jeweilige Applikation erfindungsgemäß automatisch generiert werden kann. Dazu wird die Software für den Zielzustand auf automatisch erzeugten Pfadnamen abgelegt. Damit entsteht der Vorteil, daß bei Inbetriebnahme des Zielzustandes automatisch die entsprechende und richtig konfigurierte Umgebung aktiviert wird.

Die Erfindung ist insbesondere darin zu sehen, daß eine automatische und vor allem dynamische Generierung eines Installations-Scripts erfolgt; das neue Package wird mit spezifischen Informationen des Targetsystems angereichert, so daß eine optimierte insbesondere zeitoptimierte Installation auf dem jeweiligen Targetsystem möglich ist, ohne daß weitere Systemparameter während der Installation erfragt und/oder verarbeitet werden müssen. Die zeitliche Optimierung des Zustandswechsels, insbesondere des Softwareaustausches, basiert also erfindungsgemäß auf dem Konzept, daß während der Aktivitätsphase eine zu installierende Software nicht bewegt werden muß.

Weitere vorteilhafte Ausgestaltungen der Erfindung ergeben sich aus den unter- oder nebengeordneten Ansprüchen.

Weitere Vorteile der Erfindung und besondere Ausführungsformen mit deren Merkmalen sind in der nachfolgenden detaillierten Figurenbeschreibung dargestellt. Darin zeigt:
Fig. 1a eine schematische Darstellung eines Zustandswechsels nach dem Stand der Technik,
Fig. 1b eine schematische Darstellung eines Zustandswechsels gemäß der Erfindung
Fig. 2 ein Flußdiagramm für eine Durchführung des Zustandswechsels gemäß der Erfindung.

Das Verfahren ist auf den Austausch einer alten, im Betrieb befindlichen, auszutauschenden Software 10 gegen eine erstmals oder erneut zu installierende, neue Software 12 gerichtet.

Die neue Software kann ein Update, ein Upgrade oder ein Patch der alten Software 10 sein. Es ist jedoch auch möglich, daß die zu installierende neue Software 12 bisher noch nicht installiert war und durch den Zustandswechsel eine Erstinstallation erreicht werden soll.

Das erfindungsgemäße Verfahren ist dabei in zwei unmittelbar aufeinanderfolgende Phasen gekennzeichnet: in einer Vorbereitungsphase V werden all die Prozesse ausgeführt, die zeitlich vorgezogen werden und noch während des Betriebs der alten Software 10 stattfinden können. In einer Aktivitätsphase A wird der Austauschprozess abgeschlossen, indem lediglich bestimmte Files und Directories umgehängt werden. Die Aktivitätsphase A endet mit Inbetriebnahme der neuen Software 12.

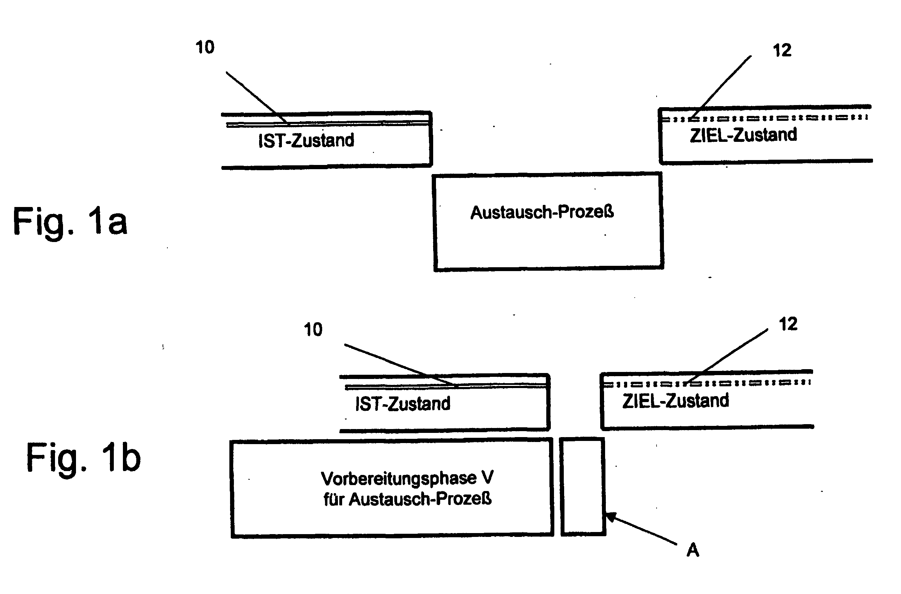

Die Figuren 1a und 1b beziehen sich auf den Wechsel zwischen Ist- und Zielzustand. Dabei ist in Figur 1a der Wechsel einer Software nach einem Verfahren im Stand der Technik dargestellt und Figur 1b betrifft das erfindungsgemäße Verfahren, das in die Vorbereitungsphase V und die Aktivitätsphase A unterglieder ist.

Durch den Austausch oder den Wechsel eines Programmes wird also ein Zustandswechsel des Rechners oder des Systems (von Rechnern) erreicht. Ein Ist-Zustand 16 wird durch den Betrieb der alten Software 10 gekennzeichnet. Dieser Ist-Zustand 16 soll in einen Ziel-Zustand 18 transformiert werden, der durch den Betrieb der neuen Software 12 gekennzeichnet ist. Durch den Einsatz des erfindungsgemäßen Verfahrens wird die Zeit für den Zustandswechsel, also die Zeit zwischen dem Shut-Down des Betriebs der alten Software 10 und dem Hochfahren der neuen Software 12 minimal gehalten.

In einer bevorzugten Ausführungsform soll der Austausch von Software auf einem Rechner eines SUN Clusters 2.2 erfolgen.

Zur Erhöhung der Verfügbarkeit der Software Applikation wird die Clusterredundanz ausgenützt, indem der Zustandswechsel nur auf der nicht-aktiven Seite des Clusters erfolgt. Damit wird der Betrieb der Software auf der aktiven Seite nicht gestört.

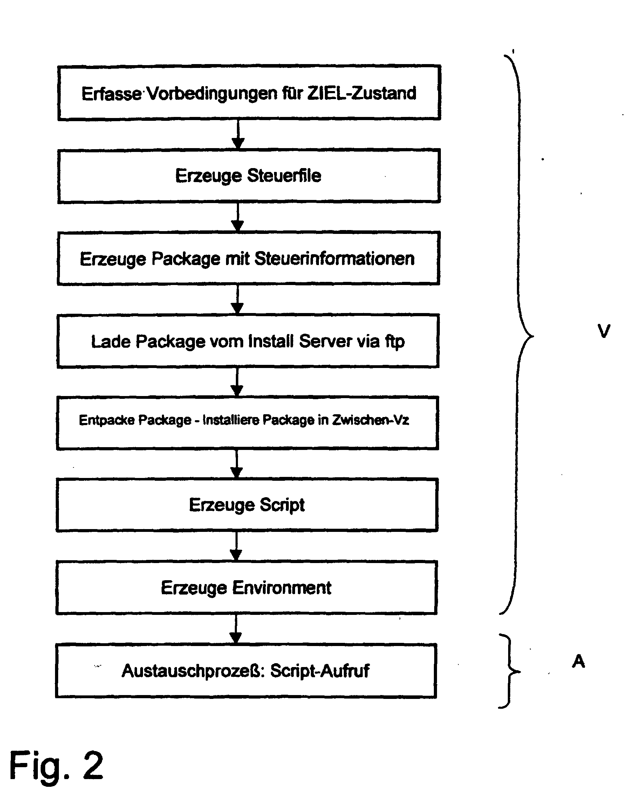

Nachfolgend wird - unter Bezugnahme auf Figur 2 - der grobe zeitliche Ablauf einer vorteilhaften Ausführungsform des erfindungsgemäßen Verfahrens erläutert, die sich auf einen UNIX-Rechner bezieht.

In diesem Zusammenhang ist anzumerken, daß andere Ausführungsformen der Erfindung eine abgewandelte Abfolge der einzelnen in Fig. 2 dargestellten Verfahrensschritte vorsehen. Dabei laufen die Steps, die in den ersten drei Balken dargestellt sind in der Software-Produktionsphase ab und die restlichen (fünf) Steps werden auf der Zielmaschine ausgeführt.

Wie in Figur 2 dargestellt, werden verfahrenseinleitend alle Vorbedingungen für die Einführung des Ziel-Zustandes, insbesondere der neuen Software 12, erfaßt. Bei der Entwicklung oder Produktion des Software Paketes wird ein sogenanntes Steuerfile 20 angelegt, in dem Steuerinformationen 22 abgelegt sind.
Die Steuerinformationen 22 werden zusammen mit der neuen Software 12 in ein Package 24 nach dem bekannten Verfahren aus dem Stand der Technik gepackt.

Die Steuerinformationen betreffen beispielsweise die gewünschte Systemreaktion bei bzw. nach der Durchführung des Zustandswechsels. Hier kann es z.B. erwünscht sein, daß nach der Installation der neuen Software 12 keine Systemreaktion erfolgen soll, oder es kann ein Stop der Applikation oder ein Stop der Applikation einschließlich deren Basis-Software erforderlich sein, nämlich der Zwischenschicht zwischen der Applikation und dem Betriebssystem. Alternativ kann festgelegt werden, daß ein kompletter Reboot stattfinden soll.

Die Steuerinformationen 22 der Packages 24 werden noch in der Vorbereitungsphase V verwendet, um ein oder mehrere Scripts 26 zu erzeugen. Diese Scripts 26 veranlassen einen zeitoptimierten Ablauf der Austauschaktion.

Weiterhin wird die neue Software 12 auf automatisch generierten Verzeichnisnamen abgelegt, die als Zwischenverzeichnis dienen. Daraufhin findet eine dynamische Zuordnung zwischen den Verzeichnisnamen und Environmentvariablen der Softwarepakete statt.

Das Betriebssystem UNIX stellt dem Administrator klar definierte Routinen zur Verfügung, wie beispielsweise die Routinen "package add" (pkgadd) und "package remove" (pkgrm), die entsprechend ihrem Namen ein Package hinzufügen oder eine Software von einem System entfernen. Das Format für UNIX-Software Packages ist unter anderem durch ein "Application Binary Interface" (ABI) definiert.

Zusammenfassend werden in der Vorbereitungsphase V alle zeitintensiven Befehle im Hintergrund des laufenden Systembetriebes auf einem Zwischenverzeichnis (in Fig. 2 ist der Begriff "Zwischenverzeichnis" im fünften Step mit "Zwischen-Vz" abgekürzt) ausgeführt. So wird nach dem Entpacken der neuen Software 12 letztere auf dem Zwischenverzeichnis - beispielsweise mittels des Kommandos "pkgadd" - installiert. Anschließend werden Scripts 26 erzeugt, die später den Austausch der alten Software 10 gegen die neue Software 12 ausführen sollen - beispielsweise aus der pkgadd-Steuerdatei "pkgmap" -. Dann wird das Environment für die neue Software 12 automatisch erzeugt.

Erst jetzt muß die alte Software 10, insbesondere die Netzbetreibersoftware, gestoppt werden. Dieser Zeitpunkt definiert auch den Übergang von der Vorbereitungsphase V in die Aktivitätsphase A. Nach dem Shut-Down der alten Software 10 werden nun die Scripts 26 wiederum in Abhängigkeit von der gewählten Ausführungsform ausgeführt, indem ein MOVE-Befehl oder eine Abfolge von MOVE-Befehlen ausgeführt wird.

Aufgrund der einleitenden Schritte in der Vorbereitungsphase V ist an dieser Stelle nunmehr die Ausführung eines MOVE-Befehls oder einer Sequenz von MOVE-Befehlen erforderlich, um die in dem Zwischenverzeichnis abgelegten Informationen in einem Zielverzeichnis verfügbar zu haben. Nach der Ausführung dieser Operation kann die neue Software 12 in Betrieb genommen werden, der Ziel-Zustand 18 ist erreicht und die Aktivitätsphase A ist abgeschlossen.

Durch die Ausführung der vorbereitenden und zeitintensiven Installationsbefehle in der Vorbereitungsphase V kann die Aktivitätsphase A auf einen minimalen Zeitraum beschränkt werden, was die Verfügbarkeit des Systems deutlich steigert. Die Ausführung der zeitintensiven Kommandos wird in der Vorbereitungsphase V durchgeführt, also parallel zum Betrieb (der alten Software 10) im Ist-Zustand 16. Deshalb kann dieser Zeitraum während der Vorbereitungsphase V hinsichtlich der Nicht-Verfügbarkeit des Systems vollständig außer Acht bleiben. Da die Erfindung nicht zuletzt darauf basiert, daß während des Ist-Zustandes 16 möglichst viele Installationsprozesse vorgezogen werden, kann die Vorbereitungsphase V eine größere Zeitspanne umfassen als es bei einem Verfahren nach dem Stand der Technik der Fall war. Doch dies beeinträchtigt die Verfügbarkeit nicht, da während des Ist-Zustandes 16 ja immer noch die alten Software 10 läuft. Nicht verfügbar ist das System ausschließlich während der minimal kurzen Aktivitätsphase A.

Der erfindungsgemäße Zeitvorteil entsteht also durch die Verwendung von einem MOVE-Befehl oder einer Sequenz von MOVE-Befehlen, die nur die Wurzel des File-Baumes, den INODE, verändern und keine Daten bewegen. Damit unterscheidet sich die erfindungsgemäße Re-Installation von den bisher bekannten, bei denen eine vollständige Kopie der Daten erzeugt wird.

Eine alternative Ausführungsform der Erfindung sieht die Verwendung des Verfahrens für Nicht-UNIX-Systeme und/oder Nicht-Cluster-Systeme vor.

Vorteilhafterweise umfaßt das erfindungsgemäße Vorgehen weitere Wahlmöglichkeiten für die Ausführung des Austauschprozesses. So kann eingestellt werden, ob eine Systemreaktion nach dem Einbringen der neuen Software 12 erwünscht ist (beispielsweise ein Reboot etc.). Weiterhin können die erforderlichen Prozesse definiert werden, die vor dem Entpacken der neuen Software 12 notwendig sind und/oder nach dem Einbringen der neuen Software 12 in das Zielverzeichnis aber noch vor dem Restart der neuen Software 12. Hierunter fallen unter anderem Prozesse, wie z.B. erforderliche Datenkonvertierungen, Linkerzeugung oder dergleichen. Weiterhin kann das Environment eingestellt werden, das im Ziel-Zustand 18 automatisch aktiviert werden soll.

Ein in der Praxis wesentlicher Vorteil ist darin zu sehen, daß das Environment der neu zu installierenden Software 12 automatisch erzeugt wird. Damit muß sich der Anwender nicht mehr mit der Auswahl der korrekten Installationspackages beschäftigen und das Verfahren kann völlig automatisiert ablaufen.

Um bei einer fehlerhaft gesteuerten Austauschaktion die lauffähige alte Software 10 , also den Ist-Zustand 16 vor der Austauschaktion, nicht zu verlieren ist zusätzlich eine Rückfallmöglichkeit vorgesehen, die einen Rückaustausch der Software vorsieht. Das heißt, der alte Ist-Zustand entspricht dem neuen Ziel-Zustand und umgekehrt. Dazu wird die alte auszutauschende Software 10 in ein Backout-Directory gesichert. Aus diesem Directory wird es dann mit demselben Verfahren wieder in das Ziel-Directory verschoben. Durch diese zusätzliche Sicherungsmaßnahme können also keine Daten verloren gehen.

Häufig wird das Verfahren jedoch angewendet, um einen Patch der Softwareapplikation automatisch installieren zu lassen. Das Korrekturprogramm, der sogenannte Patch, kann damit in der entsprechenden Version und mit der passenden Umgebung automatisch installiert werden.

## Patentansprüche

1. Verfahren zur Durchführung eines Zustandswechsels auf mindestens einem Rechner von einem Ist-Zustand (16) in einen Ziel-Zustand (18), bei dem der Zustandswechsel den Austausch oder Neubetrieb einer Software betrifft, und das sich in eine Vorbereitungsphase (V) und eine nachfolgende Aktivitätsphase (A) gliedert, wobei die Vorbereitungsphase (V) im Ist-Zustand (16) ausgeführt wird und folgende Schritte aufweist:
- Erfassen von Steuerinformationen (22), die den Ziel-Zustand (18) betreffen
- automatisches Erzeugen von mindestens einem Script (26) aus den Steuerinformationen (22),
- Speichern der Daten für den Ziel-Zustand (18) in ein Zwischenverzeichnis,
und bei dem während der Aktivitätsphase (A) der Zustandswechsel durchgeführt wird, indem der Betrieb im Ist-Zustand (16) beendet und das Script (26) angewendet wird, durch das die Daten für den Ziel-Zustand (18) aus dem Zwischenverzeichnis in ein Zielverzeichnis umgehängt werden.

2. Verfahren nach Anspruch 1,
**dadurch gekennzeichnet, daß**
der Ablauf des/der Scripts (26) zeitoptimiert ist.

3. Verfahren nach mindestens einem der vorstehenden Ansprüche,
**dadurch gekennzeichnet, daß**
automatisch eine entsprechende Umgebung für den Ziel-Zustand (18) erzeugt wird.

4. Verfahren nach mindestens einem der vorstehenden Ansprüche,
**dadurch gekennzeichnet, daß**
die Daten für den Ziel-Zustand (18) auf automatisch erzeugten Pfadnamen abgelegt werden.

5. Verfahren nach mindestens einem der vorstehenden Ansprüche,
**dadurch gekennzeichnet, daß**
der Rechner ein Rechner innerhalb eines Clusters ist.

6. Verfahren nach Anspruch 5,
**dadurch gekennzeichnet, daß**
zumindest die Aktivitätsphase (A) auf den inaktiven Seiten der Clusterrechner erfolgt.

7. Verfahren nach mindestens einem der vorstehenden Ansprüche,
**dadurch gekennzeichnet, daß**
der Rechner ein UNIX-Rechner ist.

8. Verfahren nach Anspruch 7,
**dadurch gekennzeichnet, daß**
die Daten für den Ziel-Zustand (18) nach Abschluß der Aktivitätsphase(A) nicht mehr in der Zwischenablage, sondern im Zielverzeichnis zugänglich sind, indem der Name einer Dateibaumwurzel umbenannt wird, insbesondere durch einen MOVE-Befehl.

9. Verfahren nach mindestens einem der vorstehenden Ansprüche,
**dadurch gekennzeichnet, daß**
das Verfahren zusätzlich wahlweise folgende Schritt umfaßt: automatisches Wiederherstellen des Ist-Zustandes (16) nach Durchführung des Zustandswechsels, insbesondere indem während der Installation eines Packages (24) ein Backout Package generiert wird.

10. Verfahren nach mindestens einem der vorstehenden Ansprüche,
**dadurch gekennzeichnet, daß**
die Daten für den Ziel-Zustand (18) ein Software Package (24) betreffen, in das Steuerinformationen (22) eingebracht worden sind.

11. Verfahren nach Anspruch 10,
**dadurch gekennzeichnet, daß**
das Package (24) im Zwischenverzeichnis entpackt wird.

12. Verfahren nach mindestens einem der vorstehenden Ansprüche,
**dadurch gekennzeichnet, daß**
der Zustandswechsel eine Neuinstallation einer neuen Software (12) umfaßt.

13. Verfahren nach mindestens einem der vorstehenden Ansprüche,
**dadurch gekennzeichnet, daß**
der Zustandswechsel eine Re-Installation einer alten Software (10) umfaßt, insbesondere ein Upgrade und/oder ein Update.

14. Verfahren nach mindestens einem der vorstehenden Ansprüche,
**dadurch gekennzeichnet, daß**
der Zustandswechsel eine Installation eines Patches einer alten Software (10) umfaßt.

15. Verfahren nach mindestens einem der vorstehenden Ansprüche,
**dadurch gekennzeichnet, daß**
der Zustandswechsel automatisch durchgeführt wird.

16. Programm umfassend Softwarecodeabschnitte, mit denen ein Verfahren nach einem der Ansprüche 1 bis 15 durch einen Prozessor ausgeführt wird.

17. Anordnung zur Durchführung eines Verfahrens nach einem der Ansprüche 1 bis 15.

## Claims

1. Method for performing a status change on at least one computer from an actual condition (16) to a target condition (18), the status change relating to the replacement or initial operation of software, and which is subdivided into a preparation phase (V) and a subsequent active phase (A), the preparation phase (V) being executed in the actual condition (16) and having the following steps:
- registering of control information (22) relating to the target condition (18),
- automatic generation of at least one script (26) from the control information (22),
- saving of the data for the target condition (18) to a cache directory,
and said status change being carried out during the active phase (A) by terminating operation in the actual condition (16) and applying the script (26) by means of which the data for the target condition (18) is relocated from the cache directory to a destination directory.

2. Method according to Claim 1, **characterised in that** execution of the script(s) (26) is time-optimised.

3. Method according to at least one of the preceding claims, **characterised in that** an appropriate environment for the target condition (18) is generated automatically.

4. Method according to at least one of the preceding claims, **characterised in that** the data for the target condition (18) is stored under automatically generated path names.

5. Method according to at least one of the preceding claims, **characterised in that** the computer is a computer within a cluster.

6. Method according to Claim 5, **characterised in that** at least the active phase (A) takes place on the inactive sides of the cluster computers.

7. Method according to at least one of the preceding claims, **characterised in that** the computer is a UNIX computer.

8. Method according to Claim 7, **characterised in that** on completion of the active phase (A) the data for the target condition (18) is no longer in temporary storage, but is accessible in the destination directory by renaming a file tree root, in particular by means of a MOVE command.

9. Method according to at least one of the preceding claims, **characterised in that** in addition the method optionally comprises the following step: automatic restoration of the actual condition (16) after performing the status change, particularly by generating a backout package during the installation of a package (24).

10. Method according to at least one of the preceding claims, **characterised in that** the data for the target condition (18) relates to a software package into which control information (22) has been incorporated.

11. Method according to Claim 10, **characterised in that** the package (24) is unpacked in the cache directory.

12. Method according to at least one of the preceding claims, **characterised in that** the status change involves installing new software (12) for the first time.

13. Method according to at least one of the preceding claims, **characterised in that** the status change involves re-installing old software (10), in particular an upgrade and/or an update.

14. Method according to at least one of the preceding claims,
**characterised in that** the status change involves installing a patch for old software (10).

15. Method according to at least one of the preceding claims, **characterised in that** the status change is performed automatically.

16. Program incorporating software code portions with which a method according to one of Claims 1 to 15 is executed by a processor.

17. Arrangement for carrying out a method according to one of Claims 1 to 15.

## Revendications

1. Procédé pour la réalisation d'un changement d'état sur au moins un ordinateur d'un état réel (16) dans un état cible (18), avec lequel le changement d'état concerne le remplacement ou la nouvelle exploitation d'un logiciel, et qui se subdivise en une phase de préparation (V) et une phase d'activité (A) consécutive, la phase de préparation (V) étant réalisée dans l'état réel (16) et présentant les étapes suivantes :
- enregistrement d'informations de commande (22) qui concernent l'état cible (18)
- génération automatique d'au moins un script (26) à partir des informations de commande (22),
- stockage des données pour l'état cible (18) dans un répertoire intermédiaire,
et avec lequel le changement d'état est réalisé pendant la phase d'activité (A) par le fait qu'on termine l'exploitation dans l'état réel (16) et qu'on utilise le script (26) par lequel les données pour l'état cible (18) sont transférées du répertoire intermédiaire dans un répertoire cible.

2. Procédé selon la revendication 1,
**caractérisé en ce que**
le déroulement du/des scripts (26) est optimisé dans le temps.

3. Procédé selon au moins l'une quelconque des revendications précédentes,
**caractérisé en ce que**
un environnement correspondant pour l'état cible (18) est généré automatiquement.

4. Procédé selon au moins l'une quelconque des revendications précédentes,
**caractérisé en ce que**
les données pour l'état cible (18) sont déposées sur des noms de chemins générés automatiquement.

5. Procédé selon au moins l'une quelconque des revendications précédentes,
**caractérisé en ce que**
l'ordinateur est un ordinateur à l'intérieur d'un regroupement.

6. Procédé selon la revendication 5,
**caractérisé en ce que**
au moins la phase d'activité (A) s'effectue sur les côtés inactifs des ordinateurs regroupés.

7. Procédé selon au moins l'une quelconque des revendications précédentes,
**caractérisé en ce que**
l'ordinateur est un ordinateur UNIX.

8. Procédé selon la revendication 7,
**caractérisé en ce que**
les données pour l'état cible (18) ne sont plus accessibles après l'achèvement de la phase d'activité (A) dans le dépôt intermédiaire, mais dans le répertoire cible, du fait que le nom d'une racine d'arbre de fichier est modifié, en particulier par une instruction MOVE.

9. Procédé selon au moins l'une quelconque des revendications précédentes,
**caractérisé en ce que**
le procédé comprend en supplément au choix les étapes suivantes :
rétablissement automatique de l'état réel (16) après l'exécution du changement d'état, en particulier en générant un progiciel de sauvegarde (backout-package) pendant l'installation d'un progiciel (24).

10. Procédé selon au moins l'une quelconque des revendications précédentes,
**caractérisé en ce que**
les données pour l'état cible (18) concernent un progiciel (24) dans lequel les informations de commande (22) ont été introduites.

11. Procédé selon la revendication 10,
**caractérisé en ce que**
leprogiciel (24) est décomprimé dans le répertoire intermédiaire.

12. Procédé selon au moins l'une quelconque des revendications précédentes,
**caractérisé en ce que**
le changement d'état comprend une réinstallation d'un nouveau logiciel (12).

13. Procédé selon au moins l'une quelconque des revendications précédentes,
**caractérisé en ce que**
le changement d'état comprend une réinstallation d'un ancien logiciel (10), en particulier une évolution et/ou une mise à jour.

14. Procédé selon au moins l'une quelconque des revendications précédentes,
**caractérisé en ce que**
le changement d'état comprend une installation d'une version corrigée d'un ancien logiciel (10).

15. Procédé selon au moins l'une quelconque des revendications précédentes,
**caractérisé en ce que**
le changement d'état est effectué automatiquement.

16. Programme comprenant des parties de code de logiciel, avec lesquelles un procédé est exécuté par un processeur selon l'une quelconque des revendications 1 à 15.

17. Dispositif pour la mise en oeuvre d'un procédé selon l'une quelconque des revendications 1 à 15.
